# EUROPEAN PATENT SPECIFICATION

(11) **EP 4 098 903 B1**
(45) Date of publication and mention of the grant of the patent: **19.06.2024**
(21) Application number: 22176822.9
(22) Date of filing: 01.06.2022
(51) Int. Cl.: F16D 65/18, F16D 55/227, F16D 55/48, F16D 65/56

(54) **BRAKE APPARATUS AND AUTOMOBILE**
BREMSVORRICHTUNG UND KRAFTFAHRZEUG
APPAREIL DE FREINAGE ET AUTOMOBILE

(30) Priority: 01.06.2021 CN 202110608643
(43) Date of publication of application: 07.12.2022
(73) Proprietor: Huawei Digital Power Technologies Co., Ltd., Shenzhen, 518043 (CN)
(72) Inventor: HE, Yuhui, Shenzhen, Guangdong, 518129 (CN); HE, Jianjun, Shenzhen, Guangdong, 518129 (CN)
(74) Representative: MERH-IP Matias Erny Reichl Hoffmann Patentanwälte PartG mbB

(56) References cited:
- WO-A1-03/056204
- US-A1- 2005 247 527

## Description

### TECHNICAL FIELD

This invention relates to the field of automobile technologies, and in particular, to a brake apparatus and an automobile.

### BACKGROUND

With the development of technologies, an automobile has become a common mobile vehicle in daily life of people. Generally, the automobile is provided with an electronic mechanical brake (EMB). An existing electronic mechanical brake drives, by using a plurality of transmission mechanisms, a brake pad to abut against a brake disk disposed on a drive shaft of the automobile, so as to decelerate and brake. When the brake pad is worn, a brake effect of the electronic mechanical brake usually needs to be ensured by using an electromagnetic force through cooperation of a corresponding program and electronic component. However, such a design results in a complex structure and high costs of the electronic mechanical brake.
Document US 2005/247527 A generally discloses an electronically controlled disc brake with self-servo effect comprises a ramp plate provided with a brake pad for engagement with a brake disc, an actuator for applying a control force on the ramp plate substantially transverse to the brake disc, a ramp bridge, and rollers movable in ramps in surfaces facing each other of the ramp plate and the ramp bridge. The arrangement of these members is such that a movement of the ramp plate in the tangential direction of the brake disc will cause it to move towards or away from the brake disc.
Document WO 03/056204 A generally discloses a self-reinforcing electromechanical partially lined disc brake comprising a rotatable brake disc, an electric actuator generating an actuating force, and a friction lining actuated by the electric actuator in order to enter in contact with one side of the brake disc. The electric actuator acts on the friction lining so as to place it at a wedge angle via a square assembly. The square assembly is provided with a pressure plate acting on the friction lining and a thrust bearing interacting therewith. The pressure plate is rotatable in the peripheral direction of the brake disc relative to the thrust bearing. Several first tracks extending in the peripheral direction of the brake disc are disposed in the pressure plate, each first track comprising a lowest point and two ramps extending in opposite directions from said lowest point. A second track built in analogy with the first track is disposed in the thrust bearing across from each first track of the pressure plate. Each couple configured by a first track and a second track assigned thereto forms a seat for a rolling body arranged between the tracks. At least the ramps responsible for delivering the friction lining when the brake disc rotating in the main direction of rotation brakes display a rising angle corresponding to the wedge angle.

### SUMMARY

This invention relates to a brake apparatus and an automobile, to simplify a brake apparatus structure. The present invention is defined by the independent claim. Additional features of embodiments of the invention are presented in the dependent claims.

The invention provides a brake apparatus, configured to brake a rotating part. The brake apparatus includes:
a housing, where the housing is connected to the rotating part;
a brake part, where the brake part can be in contact with the rotating part;
a transmission part, where the transmission part is connected to the brake part;
a drive part, where the drive part can drive, by using the transmission part, the brake part to move along a direction close to the rotating part for braking, and the drive part can drive, by using the transmission part, the brake part to move along a direction away from the rotating part for braking release;
a gain mechanism, where the gain mechanism is located between the housing and the brake part, and configured to apply an acting force to the rotating part by using the brake part; and
a compensation mechanism, where the compensation mechanism is configured to drive the gain mechanism to move along a direction close to the brake part, where
the compensation mechanism includes a moving member and a transmission member, the transmission member is connected to the drive part, the moving member is connected to the gain mechanism, and the drive part can drive, by using the transmission member, the moving member to move.

Such a design can implement compensation by using a mechanical structure, which helps simplify a structure of the brake apparatus.

In a possible implementation, the moving member includes a rotating member and a guide member, the rotating member is configured to connect to the transmission member and drive the guide member to rotate, and the guide member is configured to connect to the gain mechanism.

Such a design can adjust a transmission direction.

In a possible implementation, the transmission member includes a first transmission member and a second transmission member, the first transmission member is connected to the second transmission member, the first transmission member is connected to the moving member, and the second transmission member and the transmission part are connected in parallel at the drive part.

Such a design can improve transmission efficiency.

In a possible implementation, the rotating member is a ratchet wheel, the guide member is a screw, the first transmission member is a ratchet bar, and the second transmission member is a gear rod; and
a preset angle exists between the ratchet bar and the gear rod.

Such a design has an advantage of a simple structure.

In a possible implementation, the transmission part is a ball screw.

The ball screw has advantages of high transmission efficiency and high motion precision.

The transmission part is a cam mechanism.

The cam mechanism has advantages of a simple structure and smooth transmission.

The cam mechanism includes a first main portion and a second main portion, the first main portion and the second main portion are connected, and along a radial direction of the cam mechanism, a preset distance exists between a center of the first main portion and a center of the second main portion; and
the cam mechanism rotates around an axis direction of the first main portion, and the second main portion is configured to drive the brake part.

The cam mechanism has advantages of a simple structure and smooth motion.

The cam mechanism further includes a first rolling member, the first rolling member is disposed along a circumferential direction of the second main portion, and the second main portion is in contact with the brake part via the first rolling member.

Such a design can reduce friction between the cam mechanism and the brake part.

A rotation axis of the cam mechanism is perpendicular to an axis direction of the rotating part.

Such a design can improve transmission efficiency of the cam mechanism.

The brake part includes a first brake part and a second brake part, and the first brake part and the second brake part are located on two opposite sides of the rotating part along an axis direction of the rotating part.

Such a design can increase a contact area between the brake part and the rotating part, thereby improving a brake effect.

In a possible implementation, the brake apparatus further includes a connecting member, the transmission part is connected to the brake part by using the connecting member, and the connecting member can drive the first brake part and the second brake part to move along a direction close to or away from the rotating part.

Such a design can reduce a quantity of drive parts, which helps simplify a structure of the brake apparatus.

In a possible implementation, the connecting member includes a moving portion and a fitting portion, the moving portion and the fitting portion are connected, and the moving portion and the fitting portion can move relative to each other; and
the moving portion is connected to the first brake part, and the fitting portion is connected to the second brake part.

Such a design can help the connecting member to drive the first brake part and the second brake part.

In a possible implementation, the connecting member is a C-type clamp.

The C-type clamp has advantages of a simple structure and convenient installation.

In a possible implementation, the housing includes a movable portion and a body portion, the movable portion can move relative to the body portion, the drive part is connected to the first brake part by using the transmission part, the second brake part is connected to the movable portion, the gain mechanism is connected to the first brake part and the movable portion, and when the gain mechanism applies an acting force to the first brake part, a generated reaction force can act on the movable portion, to drive the movable portion to drive the second brake part to move toward a direction close to the rotating part.

Such a design can reduce an output requirement on the drive part, which helps reduce costs.

In a possible implementation, the housing further includes a guide portion, the movable portion is connected to the body portion by using the guide portion, and the movable portion can move relative to the body portion along the guide portion.

Such a design can improve motion stability of the movable portion.

The gain mechanism includes a first main structure, a second main structure, and a second rolling member, the first main structure is connected to the brake part, the second main structure is connected to the housing, the first main structure can move relative to the second main structure along a radial direction of the rotating part, and the second rolling member is located between the first main structure and the second main structure;
the first main structure has a first guide surface, and the first guide surface abuts against the second main structure by using the second rolling member; and
the first guide surface is configured to decompose an acting force between the second rolling member and the first main structure.

Such a design can increase an acting force between the brake part and the rotating part, thereby improving brake efficiency.

In a possible implementation, the first guide surface includes a first guide section and a second guide section, a preset angle exists between the first guide section and the second guide section, and along a direction in which the first guide section and the second guide section are closer to each other, the first guide surface is gradually away from the second rolling member.

Such a design can increase an acting force between the brake part and the rotating part, thereby improving brake efficiency.

In a possible implementation, the drive part is connected to the moving member by using the transmission member, the moving member is connected to the second main structure, and the moving member is configured to drive the second main structure to move along a direction close to the first main structure.

Compensation is performed by using a mechanical structure, which has an advantage of a simple structure.

In a possible implementation, the brake apparatus further includes a parking mechanism, the parking mechanism is connected to the drive part, and the parking mechanism is configured to restrict the drive part from driving the brake part to move.

Such a design can simplify a structure of the brake apparatus and improve safety.

In a possible implementation, the brake apparatus further includes a reducer, and the drive part is connected to the transmission part by using the reducer.

Such a design helps adjust a transmission ratio and improves brake efficiency.

In a possible implementation, the reducer is provided with a planetary gear set.

The planetary gear reducer has advantages of high transmission efficiency and a compact structure.

In a possible implementation, the brake apparatus further includes a manual drive apparatus, and the manual drive apparatus is connected to the transmission part and can drive, by using the transmission part, the brake part to move along a direction close to or away from the rotating part.

Such a design can improve safety of the brake apparatus.

The brake apparatus may be used in an automobile. The automobile includes the brake apparatus in any one of the implementations.

The brake apparatus is connected to a rotating part. The brake apparatus includes a housing connected to the rotating part, a brake part, a transmission part, a drive part, a gain mechanism, and a compensation mechanism. The drive part drives, by using the transmission part, the brake part to move along a direction close to or away from the rotating part for braking and braking release. A moving member of the compensation mechanism is connected to the gain mechanism, and a transmission member of the compensation mechanism is connected to the drive part, to drive the gain mechanism to move along a direction close to the brake part. Such a design improves resetting efficiency of the brake part, and compensation is performed by using a mechanical structure, which helps simplify a structure of the brake apparatus and better meets an actual use requirement.

It should be understood that the foregoing general description and the following detailed description are merely examples, and cannot limit the invention as defined in the appended claims.

### BRIEF DESCRIPTION OF DRAWINGS

FIG. 1 is a schematic diagram of a structure of a first embodiment of a brake apparatus;
FIG. 2 is a schematic diagram of a structure of a second embodiment of a brake apparatus;
FIG. 3 is a schematic diagram of a structure of a third embodiment of a brake apparatus;
FIG. 4 is a schematic diagram of a structure of a gain mechanism; and
FIG. 5 is a schematic diagram of a structure of a connectingmember.

### Reference numerals:

A: rotating part;
1: housing;
11: movable portion;
12: body portion;
13: guide portion;
2: brake part;
21: first brake part;
22: second brake part;
3: transmission part;
31: ball screw;
32: cam mechanism;
321: first main portion;
322: second main portion;
4: drive part;
5: gain mechanism;
51: first main structure;
511: first guide surface;
511 a: first guide section;
511b: second guide section;
52: second main structure;
521: second guide surface;
521a: third guide section;
521b: fourth guide section;
53: compensation mechanism;
531: moving member;
531a: rotating member;
531b: guide member;
532: transmission member;
532a: first transmission member;
532b: second transmission member;
54: second rolling member;
6: connecting member;
61: moving portion;
62: fitting portion;
7: parking mechanism;
8: reducer; and
9: manual drive apparatus.

The accompanying drawings herein are incorporated into the specification and constitute a part of the the invention specification, show embodiments conforming to and are used together with the specification to explain a principle of the invention.

### DESCRIPTION OF EMBODIMENTS

To better understand the technical solutions of this invention, the following describes embodiments in detail with reference to the accompanying drawings.

In a specific embodiment, the following further describes the invention in detail by using specific embodiments and with reference to the accompanying drawings.

With the development of technologies, an automobile has become a common vehicle in daily life of people. Generally, the automobile is provided with an electronic mechanical brake (EMB). The electronic mechanical brake includes a plurality of transmission mechanisms such as a reducer, a reduction gear set, a bevel gear set, a crank, and a connecting rod. A motor drives, by using the plurality of transmission mechanisms, a brake pad to move, and a brake disk is connected to a drive shaft of the automobile and rotates along with the drive shaft. When braking is required, the motor drives, by using the plurality of transmission mechanisms, the brake pad to get close to the brake disk and abut against the brake disk, so as to decelerate and brake by using friction between the brake pad and the brake disk. However, in such a design scheme, a quantity of transmission parts is excessive, which results in a complex structure, a large size, and high costs of the electronic mechanical brake. Moreover, an existing EMB is usually provided with structures such as a transfer gear, an electromagnetic clutch, and a transmission chain, to cooperate with a corresponding program and electronic component. When the brake pad is worn, the brake pad is compensated by using an electromagnetic force, so that the brake pad can be in contact with the brake disk well, to ensure a brake effect and improve safety. However, such a design is complex in structure and requires software and hardware to cooperate with each other, which increases overall costs.

In view of this, embodiments of the invention provide a brake apparatus and an automobile, to provide a new brake apparatus structure and improve safety.

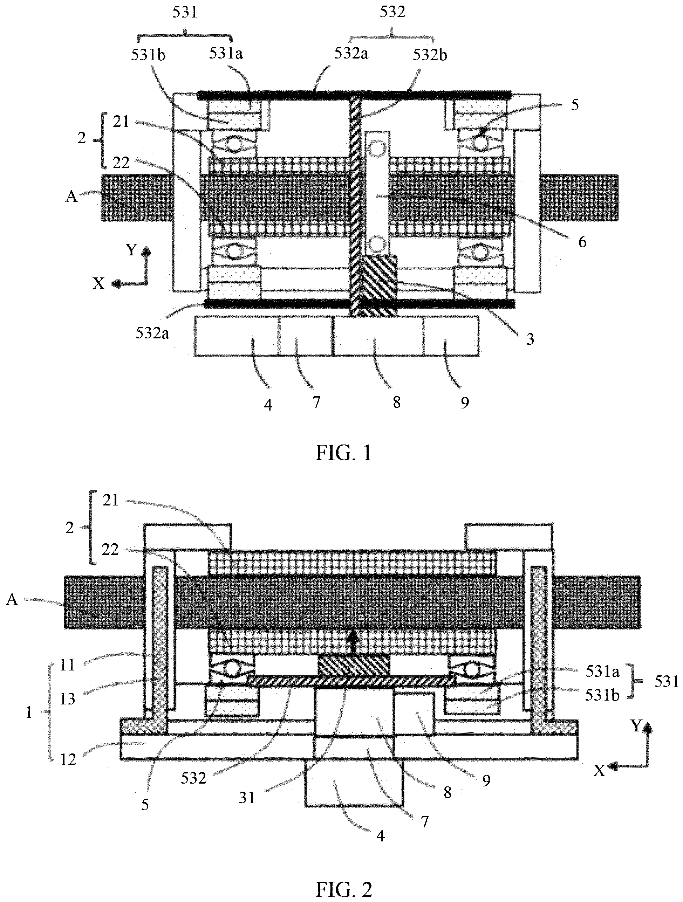

As shown in FIG. 1, an embodiment of the invention provides a brake apparatus. A rotating part A is disposed on a drive shaft of an automobile, the rotating part A may be a brake disk, the rotating part A can rotate with the drive shaft of the automobile, and the brake apparatus is connected to the rotating part A. The brake apparatus includes a housing 1, a brake part 2, a transmission part 3, and a drive part 4. The drive part 4 is connected to the brake part 2 by using the transmission part 3, and can drive the brake part 2 to get close to or away from the rotating part A. The transmission part 3 may be a single transmission mechanism, instead of a plurality of transmission mechanisms that are connected, so as to simplify a structure of the brake apparatus. When the rotating part A needs to be braked, the drive part 4 drives the brake part 2 to get close to the rotating part A and abut against the rotating part A, so that an interaction force between the brake part 2 and the rotating part A can be used to restrict the rotating part A from rotating, so as to brake. After the braking ends, the drive part 4 may drive the brake part 2 to move along a direction away from the rotating part A, so as to release the braking. Specifically, the brake apparatus may be further provided with a gain mechanism 5. When the brake part 2 abuts against the rotating part A, the gain mechanism 5 can apply an acting force to the rotating part A by using the brake part 2, to increase the interaction force between the brake part 2 and the rotating part A. This helps increase friction between the brake part 2 and the rotating part A, to improve brake efficiency and a brake effect. A compensation mechanism 53 includes a moving member 531 and a transmission member 532. The moving member 531 is connected to the gain mechanism 5, the transmission member 532 is connected to the drive part 4, and the drive part 4 can drive the transmission member 532 to drive the moving member 531 to move, so as to drive the gain mechanism 5 to move along a direction close to the brake part 2 and drive the brake part 2 to abut against the rotating part A.

Such a design can simplify an overall structure of the brake apparatus, reduce costs, and helps reduce a size of the brake apparatus. In addition, the drive part 4 drives the brake part 2 to move relative to the rotating part A, so that an additional reset mechanism can be omitted. Compared with an existing EMB having an elastic reset apparatus, the drive part 4 directly driving the brake part 2 to reset can improve reset efficiency, reduce a drag torque to help the brake part 2 to get away from the rotating part A, and reduce a possibility of failure in a resetting process, thereby prolonging a service life of the brake apparatus.

When the brake part 2 is worn, a distance between the brake part 2 and the rotating part A is increased, and a stroke of the drive part 4 during driving is increased. In addition, because the transmission member 532 is connected to the drive part 4, under the drive of the drive part 4, a stroke of the transmission member 532 is also increased, and a stroke of the gain mechanism 5 driven by the moving member 531 is also increased correspondingly, so that compensation can be performed when the brake part 2 is worn. The compensation mechanism 53 in this embodiment uses a mechanical structure. Compared with a manner in which compensation is performed by using an electromagnetic force through cooperation between software and hardware, the solution provided in this embodiment has a simpler structure, and better meets an actual use requirement

As shown in FIG. 1, in a possible implementation, the transmission part 3 may use a ball screw 31.

The ball screw 31 has advantages of high transmission efficiency and high motion precision, and the ball screw 31 moves smoothly, which can achieve a smoother braking process, thereby improving stability of the automobile during braking. Moreover, transmission of the ball screw 31 is reversible, which helps reset the brake part 2, and the ball screw 31 has a small friction loss and a long service life, which better meets an actual use requirement.

As shown in FIG. 1, the brake part 2 includes a first brake part 21 and a second brake part 22. Along a circumferential direction of the rotating part A, the first brake part 21 and the second brake part 22 are respectively located on two opposite sides of the rotating part A. The drive part 4 can drive the first brake part 21 and the second brake part 22 to clamp the rotating part A.

Such a design can increase a contact area between the brake part 2 and the rotating part A, and help increase the interaction force between the rotating part A and the brake part 2, thereby improving brake efficiency.

As shown in FIG. 1, in a possible implementation, the brake apparatus may further include a connecting member 6. The connecting member 6 is configured to connect the transmission part 3 to the first brake part 21 and the second brake part 22. Under the drive of the drive part 4 and the transmission part 3, the connecting member 6 can drive both the first brake part 21 and the second brake part 22 to move along a direction close to the rotating part A, so as to clamp the rotating part A for braking. After the braking ends, the connecting member 6 drives the first brake part 21 and the second brake part 22 to get away from the rotating part A.

Such a design can drive a plurality of brake parts 2 by using one drive part 4, which helps simplify a structure of the brake apparatus and better meets an actual use requirement.

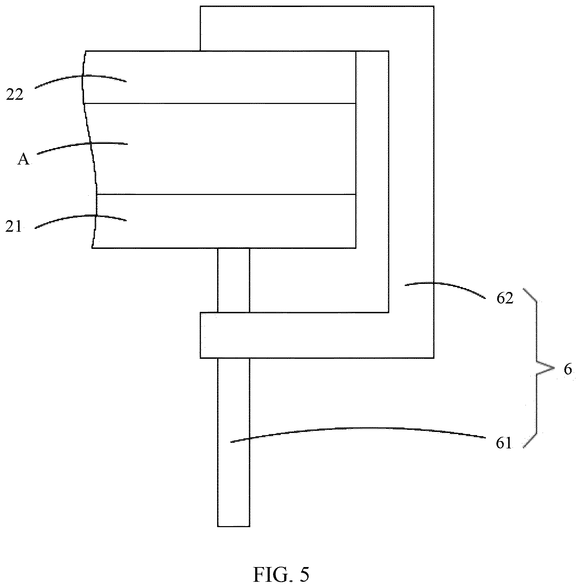

As shown in FIG. 5, in a possible embodiment, the connecting member 6 includes a moving portion 61 and a fitting portion 62. The moving portion 61 and the fitting portion 62 are connected and can move relative to each other. The moving portion 61 is connected to the first brake part 21. The fitting portion 62 is connected to the second brake part 22. Either of the moving portion 61 and the fitting portion 62 is connected to the transmission part 3. The drive part 4 drives, by using the transmission part 3, the moving portion 61 and the fitting portion 62 to move relative to each other, so that the first brake part 21 and the second brake part 22 can be brought close to each other to brake the rotating part A, and the first brake part 21 and the second brake part 22 can also be driven away from each other to release the braking of the rotating part A.

Such a design can drive both the first brake part 21 and the second brake part 22 for braking and braking release, which can reduce a quantity of drive parts 4 and simplify a structure of the brake apparatus.

Specifically, in a possible implementation, the connecting member 6 may be a C-type clamp. The C-type clamp has advantages of a simple structure and convenient installation.

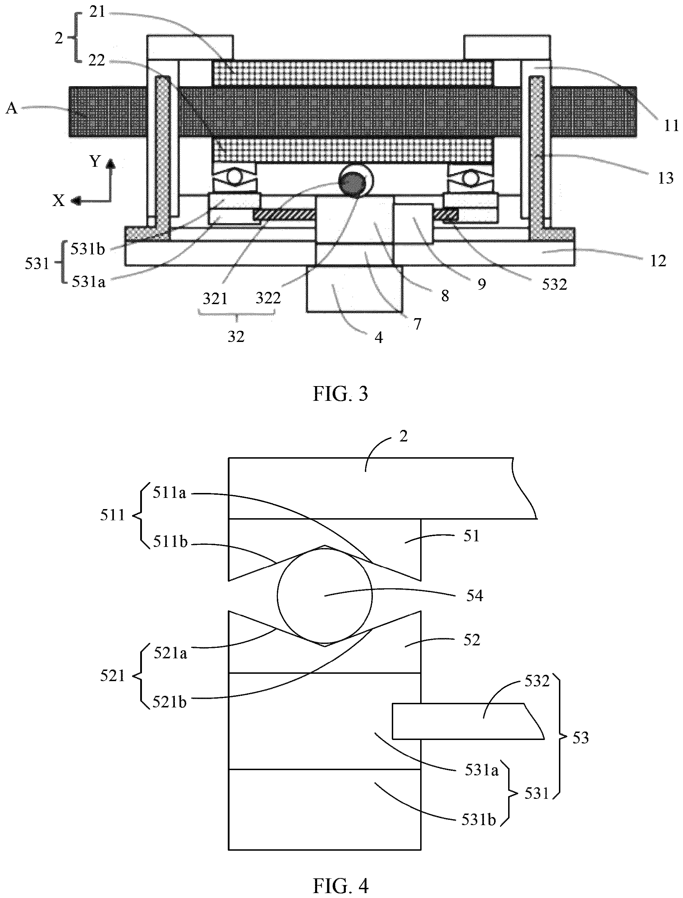

As shown in FIG. 3, the transmission part 3 uses a cam mechanism 32.

The cam mechanism 32 has advantages of a simple structure and smooth transmission. Because transmission of the cam mechanism 32 is smooth and continuous, vibration generated in the transmission process is small and noise is low, which better meets an actual use requirement.

Specifically, as shown in FIG. 3, the cam mechanism 32 includes a first main portion 321 and a second main portion 322. The first main portion 321 and the second main portion 322 are connected, and along a radial direction of the cam structure, a preset distance exists between a center of the first main portion 321 and a center of the second main portion 322. The first main portion 321 is connected to the transmission part 3, the second main portion 322 is connected to the brake part 2, and the cam mechanism 32 rotates around an axis direction of the first main portion 321.

Such a design can help form the cam mechanism 32, and a rotation radius of the cam mechanism 32 can be changed by adjusting relative positions of the first main portion 321 and the second main portion 322 during processing, to have a more flexible structure of the cam mechanism 32, and better meet an actual use requirement.

A first rolling member is disposed on an outer side of the second main portion 322. The first rolling member may be a component such as a circular bearing, configured to reduce friction between the transmission part 3 and the brake part 2, so as to reduce wear between the components, prolong a service life of the brake apparatus, and improve safety.

A rotation axis of the cam mechanism 32 is perpendicular to an axis direction of the rotating part A. Specifically, as shown in FIG. 3, in a possible implementation, the rotation axis of the cam mechanism 32 may be perpendicular to both an X direction and a Y direction in the figure. In another possible implementation, the rotation axis of the cam mechanism 32 may coincide with the X direction in the figure.

Such a design can help the cam mechanism to drive the brake part 2 to move, thereby improving transmission efficiency.

As shown in FIG. 2, in a possible implementation, the housing 1 may include a body portion 12 and a movable portion 11. The movable portion 11 is connected to the body portion 12, and can move relative to the body portion 12. The second brake part 22 is connected to the movable portion 11. The drive part 4 drives, by using the transmission part 3, the first brake part 21 to move relative to the rotating part A. When the first brake part 21 is in contact with the rotating part A, the gain mechanism 5 can apply an acting force to the rotating part A by using the first brake part 21. The generated acting force may include a force perpendicular to a radial direction of the rotating part A, which is specifically an acting force along a direction from the first brake part 21 to the rotating part A. A reaction force applied to the gain mechanism 5 can act on the movable portion 11 by using the gain mechanism 5, to drive the movable portion 11 to drive the second brake part 22 to move along a direction from the rotating part A to the first brake part 21, that is, the second brake part 22 can move along a direction close to the rotating part A, so as to clamp the rotating part A for braking.

In this manner, the drive part 4 can drive the brake part 2 only on a single side, so that a requirement on output efficiency of the drive part 4 can be reduced, thereby reducing costs and better meeting an actual use requirement.

As shown in FIG. 2, in a possible implementation, the housing 1 further includes a guide portion 13. The movable portion 11 is connected to the guide portion 13, and can move along the guide portion 13.

Such a design can improve motion stability of the movable portion 11, improve motion precision, and better meet an actual use requirement.

Specifically, in a possible implementation, the movable portion 11 may be a floating caliper, and the guide portion 13 may be a floating pin.

As shown in FIG. 1, in a possible implementation, the gain mechanism 5 includes a first main structure 51, a second main structure 52, and a second rolling member 54. The first main structure 51 is connected to the brake part 2. The second main structure 52 is connected to the housing 1. The second rolling member 54 is located between the first main structure 51 and the second main structure 52. When the brake part 2 abuts against the rotating part A, because the rotating part A rotates, a motion component along the X direction in the figure is generated, so that the brake part 2 tends to move along the X direction, to drive the first main structure 51 to move relative to the second main structure 52. Specifically, as shown in FIG. 4, the first main structure 51 has a first guide surface 511, the second main structure 52 has a second guide surface 521, and the first guide surface 511 abuts against the second guide surface 521 by using the second rolling member 54. The first guide surface 511 is configured to decompose an acting force between the second rolling member 54 and the first main structure 51 to generate a component force for driving the brake part 2 to move along the direction close to the rotating part A. In this way, the interaction force between the brake part 2 and the rotating part A is increased, thereby achieving a gain effect and improving brake efficiency.

Specifically, the second main structure 52 may also be provided with a second guide surface 521. The first guide surface 511 has a first guide section 511a and a second guide section 511b, and the second guide surface 521 has a third guide section 521a and a fourth guide section 521b. The first guide section 511a and the second guide section 511b are connected to each other with a preset angle, and along a direction in which the two are closer to each other, the first guide section 511 is gradually away from the second rolling member 54, that is, the first guide section 511 is a V-shaped structure. A structure of the second guide surface 521 may be the same as the structure of the first guide surface 511, and an opening direction of a V shape is opposite to that of the first guide surface 511.

When the brake part 2 drives the first main structure 51 to move along the X direction, the first guide surface 511 is in contact with the second rolling member and an acting force perpendicular to the first guide surface 511 is generated. The first guide surface 511 can decompose the acting force to generate a first component force parallel to the Y direction and a second component force parallel to the X direction. The first component force can act on the brake part 2 to drive the brake part 2 to move toward the direction close to the rotating part A, so that the interaction force between the brake part 2 and the rotating part A is increased, the friction is increased, a brake effect is improved, and a gain is achieved.

The gain mechanism 5 provided in this embodiment achieves a linear gain. A ratio of a driving force to a clamping force is Fs/N=tanγ·µ, and is a constant. Fs is a driving force output by a motor, N is a clamping force on the rotating part, γ is a ramp wedge angle of the guide surface, and µ is a friction coefficient. Such a design has a good gain effect and can meet use requirements of an antilock brake system (ABS) and an electronic stability controller (ESC) of the automobile.

As shown in FIG. 1, in a possible embodiment, the compensation mechanism 53 of the brake apparatus may be connected to the second main structure 52, to drive the second main structure 52 to move along a direction close to the first main structure 51.

When the brake part 2 is worn, the distance between the brake part 2 and the rotating part A is increased, and in a braking process, a displacement distance of the brake part 2 is increased. As a result, a distance between the first main structure 51 and the second main structure 52 is easily increased, and the second rolling member 54 easily falls off. Alternatively, the acting force between the second rolling member 54 and the first main structure 51 may be reduced, leading to failure of the gain mechanism 5 or a decrease in the gain.

According to the solution provided in this embodiment, the compensation mechanism 53 is disposed, so that when the distance between the first main structure 51 and the second main structure 52 is increased due to wear of the brake part 2, the compensation mechanism 53 drives the second main structure 52 to move towards the direction close to the first main structure 51, thereby helping maintain the distance between the first main structure 51 and the second main structure 52, and maintain a gain effect, better meet an actual use requirement.

In a possible implementation, the moving member 531 may include a rotating member 531a and a guide member 531b. The transmission member 532 may include a first transmission member 532a and a second transmission member 532b. The rotating member 531a may be a ratchet wheel, and the guide member 531b may be a screw. The first transmission member 532a may be a ratchet bar, and the second transmission member 532b may be a gear rod. The ratchet bar and the gear rod are connected with a preset angle, and the gear rod and the transmission part 3 may be connected in parallel at the drive part 4. The housing 1 may be provided with a thread structure to fit with the screw. When the ratchet wheel drives the screw to rotate, the screw can move relative to the housing, to drive the gain mechanism 5 to move. When the brake part 2 is worn, the distance between the brake part 2 and the rotating part A is increased, and during braking, a displacement of the brake part 2 is increased. Therefore, a stroke of the drive part 4 driving the gear rod is increased, and the gear rod drives, by using the ratchet rod, the ratchet wheel and the screw to move, so as to drive the second main structure 52 to move along the direction close to the first main structure 51.

Such a design has advantages of a simple structure and high transmission efficiency. The ratchet wheel and the screw can fit with each other to change a transmission direction, which better meets an actual use requirement.

As shown in FIG. 1, in a possible implementation, the brake apparatus may further include a parking mechanism 7. The parking mechanism 7 is connected to the drive part 4, so as to restrict the drive part 4 from driving the brake part 2 to move. When the drive part 4 is a motor, the parking mechanism 7 may be configured to lock an output shaft of the motor for parking.

Such a design can simplify a structure of the brake apparatus and improve safety.

As shown in FIG. 1, in a possible implementation, the rotating part A may further include a reducer 8. The drive part 4 is connected to the transmission part 3 by using the reducer 8.

Such a design can help adjust a transmission ratio and improve a brake effect.

Specifically, in a possible implementation, the reducer 8 has a planetary gear set, which is a planetary gear reducer 8.

The planetary gear reducer 8 has advantages of a compact structure, a large transmission ratio, high transmission efficiency, and good impact resistance, which better meets an actual use requirement.

As shown in FIG. 1, in a possible implementation, the brake apparatus may further include a manual drive apparatus 9. The manual drive apparatus 9 may be used as a backup drive part. Specifically, the manual drive apparatus 9 may have a structure such as a steel cable, and the manual drive apparatus 9 is connected to the transmission part 3. When the drive part 4 fails, a user may drive, by using the manual drive apparatus 9, the brake part 2 to move relative to the rotating part A for braking.

Such a design can improve safety of the brake part 2 and better meet an actual use requirement.

The gain mechanism 5 can also achieve a gain for the manual drive apparatus 9, so that a deceleration of backup braking reaches 1 g, where g is a gravity acceleration, which is higher than 0.25 g specified in a regulation, thereby better meeting an actual use requirement and improving safety.

Based on the brake apparatuses in the foregoing embodiments, an embodiment of this invention further provides an automobile. The automobile has a drive shaft, the drive shaft is connected to a wheel, the drive shaft is provided with a rotating part A such as a brake disk, and a brake apparatus is connected to the rotating part A. The brake apparatus may be the brake apparatus in any one of the foregoing embodiments. Because the brake apparatus has the foregoing technical effects, the automobile including the brake apparatus also has corresponding technical effects. Details are not described herein again.

The embodiments of this invention provide a brake apparatus and an automobile. The brake apparatus is connected to a rotating part A. The brake apparatus includes a housing 1 connected to the rotating part A, a brake part 2, a transmission part 3, a drive part 4, a gain mechanism 5, and a compensation mechanism 53. The drive part 4 drives, by using the transmission part 3, the brake part 2 to move along a direction close to or away from the rotating part A for braking and braking release. A moving member 531 of the compensation mechanism 53 is connected to the gain mechanism 5, and a transmission member 532 is connected to the drive part 4, to drive the gain mechanism 5 to move along a direction close to the brake part 2. Such a design improves resetting efficiency of the brake part 2, and compensation is performed by using a mechanical structure, which helps simplify a structure of the brake apparatus and better meets an actual use requirement.

## Claims

1. A brake apparatus, configured to brake a rotating part (A), wherein the brake apparatus comprises:
a housing (1), wherein the housing (1) is connected to the rotating part (A);
a brake part (2), wherein the brake part (2) can be in contact with the rotating part (A);
a transmission part (3), wherein the transmission part (3) is connected to the brake part (2);
a drive part (4), wherein the drive part (4) is a motor and can drive, by using the transmission part (3), the brake part (2) to move along a direction close to the rotating part (A) for braking, and the drive part (4) can drive, by using the transmission part (3), the brake part (2) to move along a direction away from the rotating part (A) for braking release;
a gain mechanism (5), wherein the gain mechanism (5) is located between the housing (1) and the brake part (2), and configured to apply an acting force to the rotating part (A) by using the brake part (2); and
a compensation mechanism (53), wherein the compensation mechanism (53) is configured to drive the gain mechanism (5) to move along a direction close to the brake part (2), wherein
the transmission part (3) is a cam mechanism (32);
the cam mechanism (32) comprises a first main portion (321) and a second main portion (322), the first main portion (321) and the second main portion (322) are connected, and along a radial direction of the cam mechanism (32), a preset distance exists between a center of the first main portion (321) and a center of the second main portion (322);
the cam mechanism (32) rotates around an axis direction of the first main portion (321), and the second main portion (322) is configured to drive the brake part (2);
the cam mechanism (32) further comprises a first rolling member, the first rolling member is disposed on an outer side of the second main portion (322), and the second main portion (322) is in contact with the brake part (2) via the first rolling member,
a rotation axis of the cam mechanism (32) is perpendicular to an axis direction of the rotating part (A);
the brake part (2) comprises a first brake part (21) and a second brake part (21), and the first brake part (21) and the second brake part (22) are located on two opposite sides of the rotating part (A) along the axis direction of the rotating part (A);
the gain mechanism (5) comprises a first main structure (51), a second main structure (52), and a second rolling member (54), the first main structure (51) is connected to the brake part (2), the second main structure (52) is connected to the housing (1), the first main structure (51) can move relative to the second main structure (52) along a radial direction of the rotating part (A), and the second rolling member (54) is located between the first main structure (51) and the second main structure (52);
the first main structure (51) has a first guide surface (511), and the first guide surface (511) abuts against the second main structure (52) by using the second rolling member (54);
the first guide surface (511) is configured to decompose an acting force between the second rolling member (54) and the first main structure (51) to generate a component force for driving the brake part (2) to move along the direction close to the rotating part (A);
the compensation mechanism (53) comprises a moving member (531) and a transmission member (532), the transmission member (532) is connected to the drive part (4), the moving member (531) is connected to the gain mechanism (5), and the drive part (4) can drive, by using the transmission member (532), the moving member (531) to move; and
the compensation mechanism (53) is connected to the second main structure (52), so as to drive the second main structure (52) to move along a direction close to the first main structure (51).

2. The brake apparatus according to claim 1, wherein the moving member (531) comprises a rotating member (531a) and a guide member (531b), the rotating member (531a) is configured to connect to the transmission member (532) and drive the guide member (531b) to rotate, and the guide member (531b) is configured to connect to the gain mechanism (5).

3. The brake apparatus according to claim 2, wherein the transmission member (532) comprises a first transmission member (532a) and a second transmission member (532b), the first transmission member (532a) is connected to the second transmission member (532b), the first transmission member (532a) is connected to the moving member (531), and the second transmission member (532b) and the transmission part (3) are connected in parallel at the drive part (4).

4. The brake apparatus according to claim 3, wherein the rotating member (531a) is a ratchet wheel, the guide member (531b) is a screw, the first transmission member (532a) is a ratchet bar, and the second transmission member (532b) is a gear rod; and
a preset angle exists between the ratchet bar and the gear rod.

5. The brake apparatus according to any one of claims 1 to 4, wherein the brake apparatus further comprises a connecting member (6), the transmission part (3) is connected to the brake part (2) by using the connecting member (6), and the connecting member (6) can drive the first brake part (21) and the second brake part (22) to move along a direction close to or away from the rotating part (A).

6. The brake apparatus according to claim 5, wherein the connecting member (6) comprises a moving portion (61) and a fitting portion (62), the moving portion (61) and the fitting portion (62) are connected, and the moving portion (61) and the fitting portion (62) can move relative to each other; and
the moving portion (61) is connected to the first brake part (21), and the fitting portion (62) is connected to the second brake part (22).

7. The brake apparatus according to any one of claims 1 to 4, wherein the housing (1) comprises a movable portion (11) and a body portion (12), the movable portion (11) can move relative to the body portion (12), the drive part (4) is connected to the first brake part (21) by using the transmission part (3), the second brake part (22) is connected to the movable portion (11), the gain mechanism (5) is connected to the first brake part (21) and the movable portion (11), and when the gain mechanism (5) applies an acting force to the first brake part (21), a generated reaction force can act on the movable portion (11), to drive the movable portion (11) to drive the second brake part (22) to move toward a direction close to the rotating part (A).

8. The brake apparatus according to claim 7, wherein the housing (1) further comprises a guide portion (13), the movable portion (11) is connected to the body portion (12) by using the guide portion (13), and the movable portion (11) can move relative to the body portion (12) along the guide portion (13).

9. The brake apparatus according to any one of the preceding claims, wherein the first guide surface (511) comprises a first guide section (511a) and a second guide section (511b), a preset angle exists between the first guide section (511a) and the second guide section (511b), and along a direction in which the first guide section (511a) and the second guide section (511b) are closer to each other, the first guide surface (511) is gradually away from the second rolling member (54).

10. The brake apparatus according to any one of the preceding claims, wherein the drive part (4) is connected to the moving member (531) by using the transmission member (532), the moving member (531) is connected to the second main structure (52), and the moving member (531) is configured to drive the second main structure (52) to move along a direction close to the first main structure (51).

11. The brake apparatus according to any one of claims 1 to 4, wherein the brake apparatus further comprises a parking mechanism (7), the parking mechanism (7) is connected to the drive part (4), and the parking mechanism (7) is configured to restrict the drive part (4) from driving the brake part (2) to move.

12. The brake apparatus according to any one of claims 1 to 4, wherein the brake apparatus further comprises a reducer (8), and the drive part (4) is connected to the transmission part (3) by using the reducer (8).

13. An automobile, wherein the automobile comprises the brake apparatus according to any one of claims 1 to 12.

## Patentansprüche

1. Bremsvorrichtung, die zum Bremsen eines rotierenden Teils (A) ausgelegt ist, wobei die Bremsvorrichtung folgende Elemente umfasst:
ein Gehäuse (1), wobei das Gehäuse (1) mit dem rotierenden Teil (A) verbunden ist;
ein Bremsteil (2), wobei das Bremsteil (2) in Kontakt mit dem rotierenden Teil (A) sein kann;
ein Übertragungsteil (3), wobei das Übertragungsteil (3) mit dem Bremsteil (2) verbunden ist,
ein Antriebsteil (4), wobei das Antriebsteil (4) ein Motor ist und unter Verwendung des Übertragungsteils (3) das Bremsteil (2) dazu antreiben kann, sich zum Bremsen entlang einer Richtung nahe dem rotierenden Teil (A) zu bewegen, und das Antriebsteil (4) unter Verwendung des Übertragungsteils (3) das Bremsteil (2) dazu antreiben kann, sich zum Lösen des Bremsens entlang einer Richtung weg vom rotierenden Teil (A) zu bewegen,
einen Verstärkungsmechanismus (5), wobei der Verstärkungsmechanismus (5) zwischen dem Gehäuse (1) und dem Bremsteil (2) angeordnet ist und dafür ausgelegt ist, unter Verwendung des Bremsteils (2) eine Wirkkraft auf das rotierende Teil (A) auszuüben; und
einen Kompensationsmechanismus (53), wobei der Kompensationsmechanismus (53) dafür ausgelegt ist, den Verstärkungsmechanismus (5) so anzutreiben, dass er sich entlang einer Richtung nahe dem Bremsteil (2) bewegt, wobei das Übertragungsteil (3) ein Nockenmechanismus (32) ist;
der Nockenmechanismus (32) einen ersten Hauptabschnitt (321) und einen zweiten Hauptabschnitt (322) umfasst, der erste Hauptabschnitt (321) und der zweite Hauptabschnitt (322) verbunden sind, und entlang einer radialen Richtung des Nockenmechanismus (32) ein voreingestellter Abstand zwischen einer Mitte des ersten Hauptabschnitts (321) und einer Mitte des zweiten Hauptabschnitts (322) besteht;
der Nockenmechanismus (32) sich um eine Achsenrichtung des ersten Hauptabschnitts (321) dreht, und der zweite Hauptteil (322) dafür ausgelegt ist, das Bremsteil (2) anzutreiben;
der Nockenmechanismus (32) ferner ein erstes Rollelement umfasst, wobei das erste Rollelement an einer Außenseite des zweiten Hauptabschnitts (322) eingerichtet ist und der zweite Hauptabschnitt (322) über das erste Rollelement in Kontakt mit dem Bremsteil (2) steht,
eine Drehachse des Nockenmechanismus (32) senkrecht zu einer Achsenrichtung des rotierenden Teils (A) steht;
das Bremsteil (2) ein erstes Bremsteil (21) und ein zweites Bremsteil (21) umfasst, und das erste Bremsteil (21) und das zweite Bremsteil (22) auf zwei gegenüberliegenden Seiten des rotierenden Teils (A) entlang der Achsenrichtung des rotierenden Teils (A) angeordnet sind;
der Verstärkungsmechanismus (5) eine erste Hauptstruktur (51), eine zweite Hauptstruktur (52) und ein zweites Rollelement (54) umfasst, die erste Hauptstruktur (51) mit dem Bremsteil (2) verbunden ist, die zweite Hauptstruktur (52) mit dem Gehäuse (1) verbunden ist, die erste Hauptstruktur (51) sich relativ zur zweiten Hauptstruktur (52) entlang einer radialen Richtung des rotierenden Teils (A) bewegen kann, und das zweite Rollelement (54) zwischen der ersten Hauptstruktur (51) und der zweiten Hauptstruktur (52) angeordnet ist;
die erste Hauptstruktur (51) eine erste Führungsfläche (511) aufweist, und die erste Führungsfläche (511) unter Verwendung des zweiten Rollelements (54) an der zweiten Hauptstruktur (52) anliegt;
die erste Führungsfläche (511) dafür ausgelegt ist, eine Wirkkraft zwischen dem zweiten Rollelement (54) und der ersten Hauptstruktur (51) zum Erzeugen einer Komponentenkraft zum Antreiben des Bremsteils (2) zu zerlegen, damit es sich entlang der Richtung nahe dem rotierenden Teil (A) bewegt;
der Kompensationsmechanismus (53) ein bewegliches Element (531) und ein Übertragungselement (532) umfasst, das Übertragungselement (532) mit dem Antriebsteil (4) verbunden ist, das bewegliche Element (531) mit dem Verstärkungsmechanismus (5) verbunden ist und das Antriebsteil (4) unter Verwendung des Übertragungselements (532) das bewegliche Element (531) zur Bewegung antreiben kann, und
der Kompensationsmechanismus (53) mit der zweiten Hauptstruktur (52) zum Antreiben der zweiten Hauptstruktur (52) verbunden ist, damit sie sich in einer Richtung nahe der ersten Hauptstruktur (51) bewegt.

2. Bremsvorrichtung nach Anspruch 1, wobei das bewegliche Element (531) ein rotierendes Element (531a) und ein Führungselement (531b) umfasst, das Drehelement (531a) dafür ausgelegt ist, mit dem Übertragungselement (532) verbunden zu sein und das Führungselement (531b) zum Drehen anzutreiben, und das Führungselement (531b) dafür ausgelegt ist, mit dem Verstärkungsmechanismus (5) verbunden zu sein.

3. Bremsvorrichtung nach Anspruch 2, wobei das Übertragungselement (532) ein erstes Übertragungselement (532a) und ein zweites Übertragungselement (532b) umfasst, das erste Übertragungselement (532a) mit dem zweiten Übertragungselement (532b) verbunden ist, das erste Übertragungselement (532a) mit dem beweglichen Element (531) verbunden ist und das zweite Übertragungselement (532b) und das Übertragungsteil (3) am Antriebsteil (4) parallel geschaltet sind.

4. Bremsvorrichtung nach Anspruch 3, wobei das rotierende Element (531a) ein Klinkenrad ist, das Führungselement (531b) eine Schraube ist, das erste Übertragungselement (532a) eine Klinkenstange ist und das zweite Übertragungselement (532b) eine Zahnstange ist; und
zwischen der Klinkenstange und der Zahnstange ein voreingestellter Winkel besteht.

5. Bremsvorrichtung nach einem der Ansprüche 1 bis 4, wobei die Bremsvorrichtung ferner ein Verbindungselement (6) umfasst, das Übertragungsteil (3) mit dem Bremsteil (2) unter Verwendung des Verbindungselements (6) verbunden ist und das Verbindungselement (6) das erste Bremsteil (21) und das zweite Bremsteil (22) so antreiben kann, dass sie sich in einer Richtung nahe dem rotierenden Teil (A) oder von diesem weg bewegen.

6. Bremsvorrichtung nach Anspruch 5, wobei das Verbindungselement (6) einen beweglichen Abschnitt (61) und einen Passabschnitt (62) umfasst, wobei der bewegliche Abschnitt (61) und der Passabschnitt (62) verbunden sind und der bewegliche Abschnitt (61) und der Passabschnitt (62) sich relativ zueinander bewegen können; und
der bewegliche Abschnitt (61) mit dem ersten Bremsteil (21) verbunden ist, und der Passabschnitt (62) mit dem zweiten Bremsteil (22) verbunden ist.

7. Bremsvorrichtung nach einem der Ansprüche 1 bis 4, wobei das Gehäuse (1) einen beweglichen Abschnitt (11) und einen Körperabschnitt (12) umfasst, der bewegliche Abschnitt (11) sich relativ zum Körperabschnitt (12) bewegen kann, das Antriebsteil (4) mit dem ersten Bremsteil (21) unter Verwendung des Übertragungsteils (3) verbunden ist, der zweite Bremsteil (22) mit dem beweglichen Abschnitt (11) verbunden ist, der Verstärkungsmechanismus (5) mit dem ersten Bremsteil (21) und dem beweglichen Abschnitt (11) verbunden ist, und wenn der Verstärkungsmechanismus (5) eine Wirkkraft auf das erste Bremsteil (21) ausübt, eine erzeugte Reaktionskraft auf den beweglichen Abschnitt (11) zum Antreiben des beweglichen Abschnitts (11) wirken kann, um den zweiten Bremsteil (22) so anzutreiben, dass er sich in eine Richtung nahe dem rotierenden Teil (A) bewegt.

8. Bremsvorrichtung nach Anspruch 7, wobei das Gehäuse (1) ferner einen Führungsabschnitt (13) umfasst, der bewegliche Abschnitt (11) mit dem Körperabschnitt (12) unter Verwendung des Führungsabschnitts (13) verbunden ist und der bewegliche Abschnitt (11) sich relativ zum Körperabschnitt (12) entlang des Führungsabschnitts (13) bewegen kann.

9. Bremsvorrichtung nach einem der vorhergehenden Ansprüche, wobei die erste Führungsfläche (511) einen ersten Führungsabschnitt (511a) und einen zweiten Führungsabschnitt (511b) umfasst, ein voreingestellter Winkel zwischen dem ersten Führungsabschnitt (511a) und dem zweiten Führungsabschnitt (511b) besteht und entlang einer Richtung, in der sich der erste Führungsabschnitt (511a) und der zweite Führungsabschnitt (511b) einander annähern, die erste Führungsfläche (511) allmählich vom zweiten Rollelement (54) entfernt ist.

10. Bremsvorrichtung nach einem der vorhergehenden Ansprüche, wobei das Antriebsteil (4) mit dem beweglichen Element (531) unter Verwendung des Übertragungselements (532) verbunden ist, das bewegliche Element (531) mit der zweiten Hauptstruktur (52) verbunden ist und das bewegliche Element (531) dafür ausgelegt ist, die zweite Hauptstruktur (52) so anzutreiben, dass sie sich entlang einer Richtung nahe der ersten Hauptstruktur (51) bewegt.

11. Bremsvorrichtung nach einem der Ansprüche 1 bis 4, wobei die Bremsvorrichtung ferner einen Parkmechanismus (7) umfasst, der Parkmechanismus (7) mit dem Antriebsteil (4) verbunden ist und der Parkmechanismus (7) dafür ausgelegt ist, das Antriebsteil (4) daran zu hindern, das Bremsteil (2) zu bewegen.

12. Bremsvorrichtung nach einem der Ansprüche 1 bis 4, wobei die Bremsvorrichtung ferner ein Reduziergetriebe (8) umfasst und das Antriebsteil (4) mit dem Übertragungsteil (3) unter Verwendung des Reduziergetriebes (8) verbunden ist.

13. Kraftfahrzeug, wobei das Kraftfahrzeug die Bremsvorrichtung nach einem der Ansprüche 1 bis 12 umfasst.

## Revendications

1. Appareil de freinage configuré de façon à freiner une pièce rotative (A), cet appareil de freinage comprenant :
un carter (1), ce carter (1) étant relié à la pièce rotative (A) ;
une pièce de freinage (2), cette pièce de freinage (2) pouvant être en contact avec la pièce rotative (A) ;
une pièce de transmission (3), cette pièce de transmission (3) étant reliée à la pièce de freinage (2) ;
une pièce d'entraînement (4), cette pièce d'entraînement (4) étant un moteur et pouvant entraîner, en utilisant la pièce de transmission (3), la pièce de freinage (2) pour qu'elle se déplace le long d'une direction de rapprochement vers la pièce rotative (A) pour freiner, et cette pièce d'entraînement (4) pouvant entraîner, en utilisant la pièce de transmission (3), la pièce de freinage (2) pour qu'elle se déplace le long d'une direction d'éloignement de la pièce rotative (A) pour relâcher le freinage ;
un mécanisme de gain (5), ce mécanisme de gain (5) étant situé entre le carter (1) et la pièce de freinage (2) , et étant configuré de façon à appliquer une force d'action sur la pièce rotative (A) en utilisant la pièce de freinage (2) ; et
un mécanisme de compensation (53), ce mécanisme de compensation (53) étant configuré de façon à entraîner le mécanisme de gain (5) pour qu'il se déplace le long d'une direction de rapprochement vers la pièce de freinage (2),
la pièce de transmission (3) étant un mécanisme à came (32) ;
le mécanisme à came (32) comportant une première partie principale (321) et une deuxième partie principale (322), la première partie principale (321) et la deuxième partie principale (322) étant reliées, et disposées le long d'une direction radiale du mécanisme à came (32), une distance prédéterminée existant entre un centre de la première partie principale (321) et un centre de la deuxième partie principale (322) ;
le mécanisme à came (32) tournant autour d'une direction d'axe de la première partie principale (321), et la deuxième partie principale (322) étant configurée de façon à entraîner la pièce de freinage (2) ;
le mécanisme à came (32) comprenant en outre un premier élément roulant, ce premier élément roulant étant disposé sur un côté extérieur de la deuxième partie principale (322) et la deuxième partie principale (322) étant en contact avec la pièce de freinage (2) via ce premier élément roulant ;
un axe de rotation du mécanisme à came (32) étant perpendiculaire à une direction d'axe de la pièce rotative (A) ;
la pièce de freinage (2) comportant un première pièce de freinage (21) et une deuxième pièce de freinage (21), et la première pièce de freinage (21) et la deuxième pièce de freinage (22) étant situées sur deux côtés opposés de la pièce rotative (A) le long de la direction de l'axe de la pièce rotative (A) ;
le mécanisme de gain (5) compotant une première structure principale (51), une deuxième structure principale (52) et un deuxième élément roulant (54), la première structure principale (51) étant reliée à la pièce de freinage (2), la deuxième structure principale (52) étant reliée au carter (1), la première structure principale (51) pouvant bouger par rapport à la deuxième structure principale (52) le long d'une direction radiale de la pièce rotative (A), et le deuxième élément roulant (54) étant situé entre la première structure principale (51) et la deuxième structure principale (52) ;
la première structure principale (51) ayant une première surface de guidage (511), et
cette première surface de guidage (511) venant en butée contre la deuxième structure principale (52) en utilisant le deuxième élément roulant (54) ;
la première surface de guidage (511) étant configurée de façon à décomposer une force d'action entre le deuxième élément roulant (54) et la première structure principale (51) afin de générer une force composante pour entraîner la pièce de freinage (2) pour qu'elle se déplace le long de la direction de rapprochement vers la pièce rotative (A) ;
le mécanisme de compensation (53) comportant un élément mobile (531) et un élément de transmission (532), l'élément de transmission (532) étant relié à la pièce d'entraînement (4), l'élément mobile (531) étant relié au mécanisme de gain (5), et la pièce de d'entraînement (4) pouvant entraîner, en utilisant l'élément de transmission (532), l'élément mobile (531) pour qu'il bouge ; et
le mécanisme de compensation (53) étant relié à la deuxième structure principale (52), afin d'entraîner la deuxième structure principale (52) pour qu'elle se déplace le long d'une direction de rapprochement vers la première structure principale (51).

2. Appareil de freinage selon la revendication 1, dans lequel l'élément mobile (531) comporte un élément rotatif (531a) et un élément de guidage (531b), l'élément rotatif (531a) étant configuré de façon à être relié à l'élément de transmission (532) et à entraîner l'élément de guidage (531b) pour qu'il tourne, et l'élément de guidage (531b) étant configuré de façon à être relié au mécanisme de gain (5).

3. Appareil de freinage selon la revendication 2, dans lequel l'élément de transmission (532) comporte un premier élément de transmission (532a) et un deuxième élément de transmission (532b), le premier élément de transmission (532a) étant relié au deuxième élément de transmission (532b), le premier élément de transmission (532a) étant relié à l'élément mobile (531), et le deuxième l'élément de transmission (532b) et la pièce de transmission (3) étant reliés en parallèle au niveau de la pièce d'entraînement (4).

4. Appareil de freinage selon la revendication 3, dans lequel l'élément rotatif (531a) est une roue à rochet, l'élément de guidage (531b) est une vis, le premier élément de transmission (532a) est une barre à rochet, et le deuxième élément de transmission (532b) est une tige d'engrenage ; et
un angle prédéterminé existe entre la barre à rochet et la tige d'engrenage.

5. Appareil de freinage selon l'une quelconque des revendications 1 à 4, cet appareil de freinage comprenant en outre un élément de liaison (6), la pièce de transmission (3) étant reliée à la pièce de freinage (2) en utilisant l'élément de liaison (6), et l'élément de liaison (6) pouvant entraîner la première pièce de freinage (21) et la deuxième pièce de freinage (22) pour qu'elles se déplacent le long d'une direction de rapprochement vers la pièce rotative (A) ou le long d'une direction d'éloignement de la pièce rotative (A).

6. Appareil de freinage selon la revendication 5, dans lequel l'élément de liaison (6) comporte une partie mobile (61) et une partie d'ajustement (62), la partie mobile (61) et la partie d'ajustement (62) étant reliées, et la partie mobile (61) et la partie d'ajustement (62) pouvant bouger l'une par rapport à l'autre ; et
la partie mobile (61) étant reliée à la première pièce de freinage (21), et la partie d'ajustement (62) étant reliée à la deuxième pièce de freinage (22).

7. Appareil de freinage selon l'une quelconque des revendications 1 à 4, dans lequel le carter (1) comporte une partie mobile (11) et une partie corps (12), la partie mobile (11) pouvant bouger par rapport à la partie corps (12), la pièce d'entraînement (4) étant reliée à la première pièce de freinage (21) en utilisant la pièce de transmission (3), la deuxième pièce de freinage (22) étant reliée à la partie mobile (11), le mécanisme de gain (5) étant relié à la première pièce de freinage (21) et à la partie mobile (11), et, lorsque le mécanisme de gain (5) applique une force d'action sur la première pièce de freinage (21), une force de réaction générée peut agir sur la partie mobile (11), pour entraîner la partie mobile (11) pour qu'elle entraîne la deuxième pièce de freinage (22) afin que celle-ci se déplace dans une direction de rapprochement vers la pièce rotative (A).

8. Appareil de freinage selon la revendication 7, dans lequel le carter (1) comprend en outre une partie de guidage (13), la partie mobile (11) étant reliée à la partie corps (12) en utilisant la partie de guidage (13), et la partie mobile (11) pouvant bouger par rapport à la partie corps (12) le long de la partie de guidage (13).

9. Appareil de freinage selon l'une quelconque des revendications précédentes, dans lequel la première surface de guidage (511) comporte une première section de guidage (511a) et une deuxième section de guidage (511b), un angle prédéterminé existant entre la première section de guidage (511a) et la deuxième section de guidage (511b), et le long d'une direction dans laquelle la première section de guidage (511a) et la deuxième section de guidage (511b) sont plus proches l'une de l'autre, la première surface de guidage (511) s'éloignant progressivement du deuxième élément roulant (54).

10. Appareil de freinage selon l'une quelconque des revendications précédentes, dans lequel la pièce d'entraînement (4) est reliée à l'élément mobile (531) en utilisant l'élément de transmission (532), l'élément mobile (531) étant relié à la deuxième structure principale (52), et l'élément mobile (531) étant configuré de façon à entraîner la deuxième structure principale (52) pour qu'elle se déplace le long d'une direction de rapprochement vers la première structure principale (51).

11. Appareil de freinage selon l'une quelconque des revendications 1 à 4, cet appareil de freinage comprenant en outre un mécanisme de stationnement (7), ce mécanisme de stationnement (7) étant relié à la pièce d'entraînement (4), et ce mécanisme de stationnement (7) étant configuré de façon à restreindre la pièce d'entraînement (4) pour l'empêcher d'entraîner la pièce de freinage (2) pour qu'elle se déplace.

12. Appareil de freinage selon l'une quelconque des revendications 1 à 4, cet appareil de freinage comprenant en outre un réducteur (8), et la pièce d'entraînement (4) étant reliée à la pièce de transmission (3) en utilisant le réducteur (8).

13. Automobile, cette automobile comportant l'appareil de freinage selon l'une quelconque des revendications 1 à 12.
